# EUROPÄISCHE PATENTSCHRIFT

(11) **EP 2 664 540 B1**
(45) Veröffentlichungstag und Bekanntmachung des Hinweises auf die Patenterteilung: **12.04.2017**
(21) Anmeldenummer: 13166971.5
(22) Anmeldetag: 08.05.2013
(51) Int. Cl.: B64D 9/00, B60P 7/08

(54) **Verriegelungseinrichtung zum Sichern und Führen mindestens eines Frachtstücks**
Interlocking device for securing and guiding at least one freight package
Dispositif de verrouillage pour sécuriser et guider au moins un colis

(30) Priorität: 15.05.2012 DE 102012104235
(43) Veröffentlichungstag der Anmeldung: 20.11.2013
(73) Patentinhaber: Telair International GmbH, 83714 Miesbach (DE)
(72) Erfinder: Holzner, Richard, 83071 Stephanskirchen (DE)
(74) Vertreter: Bohnenberger, Johannes

(56) Entgegenhaltungen:
- DE-A1-102008 030 558
- DE-A1-102010 017 535
- DE-A1-102010 060 467
- DE-C1- 19 544 796
- US-A- 5 011 348

## Beschreibung

Die Erfindung betrifft eine Profilschiene mit einer Verriegelungseinrichtung zum Sichern und Führen mindestens eines Frachtstücks gemäß Anspruch 1.

Im Laderaum eines Flugzeugs, insbesondere eines Großraumflugzeugs, werden Frachtstücke (z.B. Container oder Paletten, "ULD: Unit Load Device") üblicherweise mittels Rollenbahnen bewegt. Befestigungsschienen (z. B. Profilschienen), welche am Frachtladedeck des Flugzeugs befestigt sind, dienen zur Aufnahme von Funktionselementen. Derartige Funktionselemente können Verriegelungseinrichtungen/Befestigungseinrichtungen zum zumindest teilweisen Sichern von Frachtstücken sein. Die Verriegelungseinrichtungen können auch unmittelbar in den Laderaum integriert sein.

Entsprechende Verriegelungseinrichtungen dienen nicht nur zum Sichern der Frachtstücke in ihrer Endposition, sondern auch zum Führen der Frachtstücke in eine vorgegebene Richtung. Häufig werden die Frachtstücke mittels Frachtfördereinrichtungen ("PDU: Power Drive Units") angetrieben, so dass es notwendig ist, durch die Verriegelungseinrichtungen eine bestimmte Richtung vorzugeben. Häufig werden Frachträume mittels mehrerer Verriegelungseinrichtungen in mehrere Frachtladebahnen unterteilt, die an die Größe der Frachtstücke angepasst sind.

Ein defektes Frachtladesystem, sei es aufgrund einer Fehlbedienung oder aufgrund einer natürlichen Abnutzung - kann zu erheblichen Kosten führen, da das Unterhalten eines Großraumflugzeugs sehr teuer ist. Jede Minute, die ein Großraumflugzeug auf dem Boden verbringt, kostet den Betreiber Geld.

Des Weiteren ist es zu berücksichtigen, dass bei dem Transport von Ladung per Flugzeug das Gewicht eine entscheidende Rolle spielt. Daher versucht man, das Eigengewicht des Flugzeugs, insbesondere des Frachtladesystems, zu minimieren. Es wird versucht eine Vielzahl von Konfigurationen des Frachtladedecks mit möglichst wenigen Funktionselementen (z. B. Verriegelungseinrichtungen) bereitzustellen.

Des Weiteren soll das Be- und Entladen entsprechender Großraumflugzeuge möglichst schnell vonstatten gehen. Vorzugsweise erfolgt das Be- und Entladen teilweise automatisiert oder vollautomatisiert. Die Funktionselemente führen die Frachtstücke beim Be- und Entladen z. B. durch das Vorgeben von Frachtladebahnen. Beim Fördern der Frachtstücke in das Innere des Frachtladeraums ist es äußerst problematisch, wenn sich die Frachtstücke innerhalb einer Frachtladebahn verklemmen. In diesen Fällen kann es zu einer Beschädigung des Frachtladesystems kommen. Im günstigsten Fall ist ein manueller Eingriff notwendig, um die Frachtstücke wieder in entsprechender Weise auszurichten. Dieser Eingriff erfordert kostbare Zeit.

Aus der US 5,011,348 ist eine Befestigungseinrichtung bekannt, die in der Mitte eines Frachtladedecks entlang der Längsrichtung des Flugzeugs installiert ist und dort als Führung dient. Dieser Mittelriegel ("Center Guide") verfügt über zwei Riegelkrallen, an denen jeweils eine Riegelnase befestigt ist, die in entgegengesetzte Richtungen zeigen. Die Riegelnasen sind dazu ausgebildet, Teilabschnitte der Frachtstücke zu umgreifen, diese in Querrichtung des Flugzeugs (Y-Achse) abzusichern und derart festzuhalten, dass die Frachtstücke nicht aus der Führung gehoben werden. Die Riegelkrallen sind gelenkig an einem Rahmen gelagert, so dass sie sich in Längsrichtung wegklappen lassen, wenn sie von einem Frachtstück überfahren werden. Der damit verbundene Mechanismus ist sehr aufwändig. Die gesamte Konstruktion der Verriegelungseinrichtung aus der US 5,011,348 ist sehr groß und bedarf ausreichend Platz. Des Weiteren ist die Verriegelungseinrichtung schwer und kompliziert aufgebaut, so dass in der rauen Benutzungsumgebung zahlreiche Elemente ausfallen können.

Des Weiteren ist eine abklappbare Verriegelungseinrichtung zum Sichern und/oder Führen mindestens eines Frachtstücks aus der DE 10 2010 017 535 A1 bekannt. Diese lässt sich in Querrichtung des Flugzeugs verschieben, um die Breite der Frachtförderbahnen an die Frachtstücke anzupassen. Die Verriegelungseinrichtung weist jeweils zwei in entgegengesetzte Richtungen zeigende Riegelnasen auf, die die Frachtstücke in zwei nebeneinander liegenden Frachtförderbahnen sichern können. Diese Verriegelungseinrichtung ist relativ voluminös, so dass hierfür im Frachtladedeck ausreichend Platz vorgesehen werden muss. In vorhandene Profilschienen lässt sich die Verriegelungseinrichtung nicht montieren. Des Weiteren ist die Verriegelungseinrichtung der DE 10 2010 017 535 A1 zum Führen von Frachtstücken während deren Förderung in einer Frachtladebahn eher ungeeignet, so dass es dazu kommen kann, dass sich das Frachtstück innerhalb der Frachtförderbahn querstellt. Dies hat zur Folge, dass die Verriegelungseinrichtung aus deren Fixierstellung in deren Ruhestellung wegklappt. In der Ruhestellung kann sie von dem Frachtstück einfach überfahren werden, was zwar eine Beschädigung der Verriegelungseinrichtung verhindert, aber dennoch zu einer Verzögerung des Ladevorgangs führt.

Aus der US 6 270 300 B1 ist eine weitere Verriegelungseinrichtung bekannt, die mit Drehnasen versehen ist, die eine Mindestbreite von 2 Zoll zwischen zwei Frachtstücken bzw. ULDs benötigt. Würde man diese Verriegelungseinrichtung zur Erzielung einer geringeren Mindestbreite mit starren Nasen aufbauen, so wäre ein Verklemmen beim Verschwenken durch Mitziehen einer entlangfahrenden Frachtstück-Kante die (häufige) Folge. Ein solches Abstoppen eines bewegten Frachtstücks (ULDs) ist unbedingt zu vermeiden.

Die DE 10 2008 030 558 A1 beschreibt einen länglichen Riegel, der seitlich - quer zur Längsrichtung - abklappbar ist. In seiner aufgestellten Position wird er durch ein Rückhalteelement gestützt und kann in dieser Position blockiert werden. Der Riegel der DE 10 2008 030 558 A1 dient zur Führung eines Frachtstücks.

Die DE 195 44 796 C1, die den nächstliegenden Stand der Technik offenbart, zeigt zwei längliche Riegelelemente, die jeweils an ihren ersten Enden gelenkig miteinander verbunden sind und an ihren zweiten Enden gelenkig jeweils über eine Achse in einer Schiene gehaltert sind. Die Achsen der zweiten Enden liegen innerhalb einer Kulissenführung und sind derart gegeneinander vorgespannt, dass die ersten Enden brückenartig über die Schiene hinausragen. In einem aufgestellten Zustand sind die Riegelelemente dazu geeignet, Frachtstücke zu führen. Drückt man oberhalb des die beiden Riegelelemente verbindenden Gelenks auf die Riegelelemente, so lässt sich die Federkraft überwinden und der Riegel absenken. Hierbei bewegen sich die zweiten Enden mit den Achsen der Riegelelemente innerhalb der Kulissenführung auseinander.

Ausgehend von diesem Stand der Technik, ist es Aufgabe der vorliegenden Erfindung, eine verbesserte Verriegelungseinrichtung zum Sichern und/oder Führen mindestens eines Frachtstücks bereitzustellen. Insbesondere soll eine Verriegelungseinrichtung bereitgestellt werden, die eine sichere Führung der Frachtstücke gewährleistet, vorzugsweise in eine Ruheposition/Ruhestellung verschwenkbar ist und/oder sich in vorhandene Profilschienen montieren lässt.

Diese Aufgabe wird durch eine Profilschiene gemäß dem vorliegenden Anspruch 1 gelöst.

Ein Vorteil der Erfindung besteht darin, dass die Verriegelungseinrichtung sehr kompakt ausgebildet sein kann. Es ist möglich, diese Verriegelungseinrichtung in bzw. innerhalb einer relativ schmalen Profilschiene zu montieren, die beispielsweise auch Rollenantriebseinheiten, passive Rollen und/oder Riegel, die Frachtstücke in Längs- oder Querrichtung des Flugzeugs absichern, aufweist. Die gesonderte Ausbildung der Auslöseeinrichtung verhindert ein ungewolltes Absenken des Führungsschlittens, wenn Frachtstücke seitlich an den Führungsschlitten herangefahren werden oder an diesen anliegen. Bei einem Anfahren der Verriegelungseinrichtung in Längsrichtung wird der Führungsschlitten jedoch entsichert, so dass dieser aus der Fixierstellung in die Ruhestellung verschwenkt werden kann oder automatisch abschwenkt. Der Rampenabschnitt ermöglicht ein automatisches Auslösen der Auslöseeinrichtung, so dass diese aus der Blockierstellung in die Freigabestellung von einem heranfahrenden Frachtstück verschwenkt wird. In der Blockierstellung blockiert die Auslöseeinrichtung den Führungsschlitten, so dass dieser fest in der Fixierstellung verbleibt. In der Freigabestellung der Auslöseeinrichtung ist ein Wechsel zwischen Fixierstellung und Ruhestellung des Führungsschlittens möglich. In der Fixierstellung des Führungsschlittens kann dieser Frachtstücke festhalten und führen, während der Führungsschlitten in der Ruhestellung von Frachtstücken überfahren werden kann.

Mittels der erfindungsgemäßen Verriegelungseinrichtung ist es möglich, ein Frachtladedeck derart einzurichten, dass Frachtstücke mit unterschiedlichen Abmessungen einfach und sicher transportiert werden können. Das Umrüsten des Frachtladedecks ist relativ einfach. Des Weiteren gewährleistet die Verschwenkbarkeit des Führungsschlittens, dass auch bei unsachgemäßer Handhabung die Verriegelungseinrichtung und/oder die Frachtstücke nicht beschädigt werden, da der Führungsschlitten, soweit er seitlich - entlang der Längsrichtung - angefahren wird, einfach abtaucht.

Vorzugsweise ist die Querrichtung der Verriegelungseinrichtung so definiert, dass sie senkrecht zur Längsrichtung der Verriegelungseinrichtung verläuft. Für das Verschwenken der Auslöseeinrichtung zwischen der Blockierstellung und der Freigabestellung ist es jedoch nicht notwendig, dass das Frachtstück exakt aus der Längsrichtung auf den Auslöseeinrichtungs-Rampenabschnitt zufährt. Vorzugsweise ist dieser Auslöseeinrichtungs-Rampenabschnitt derart ausgebildet, dass ein Frachtstück, das im Wesentlichen entlang der Längsrichtung auf die Verriegelungseinrichtung zufährt, die Auslöseeinrichtung betätigt.

Die Verriegelungseinrichtung kann mindestens zwei Auslöseeinrichtungen aufweisen, die wechselseitig des Führungsschlittens angeordnet sind. Insofern ist es für das Auslösen der Auslöseeinrichtung irrelevant, aus welcher Richtung das Frachtstück auf den Führungsschlitten zufährt, solange die Anfahrtsrichtung im Wesentlichen senkrecht zur Querrichtung der Verriegelungseinrichtung verläuft. Auf jeder Seite des Führungsschlittens kann sich eine Auslöseeinrichtung zum Freisetzen des Führungsschlittens befinden.

Der Führungsschlitten, die erste und die zweite Auslöseeinrichtung können im Wesentlichen auf einer entlang der Längsrichtung verlaufenden Linie angeordnet sein.

Es ist denkbar, dass zwischen der Auslöseeinrichtung und dem Führungsschlitten eine mechanische Kupplung besteht. In diesem Fall kann bei einem Verschwenken der Auslöseeinrichtung aus der Blockierstellung in die Freigabestellung automatisch eine Verschwenkung des Führungsschlittens aus der Fixierstellung in die Ruhestellung entgegen der Kraft einer Aufstell-Feder erfolgen. Andererseits kann der Führungsschlitten mindestens einen Führungsschlitten-Rampenabschnitt aufweisen, der derart angeordnet und ausgebildet ist, dass ein in Längsrichtung heranfahrendes Frachtstück den entsicherten Führungsschlitten aus der Fixierstellung in die Ruhestellung verschwenkt. Insofern entsichert ein in Längsrichtung heranfahrendes Frachtstück erst den Führungsschlitten (Auslösung der Auslöseeinrichtung) und drückt dann mittels des Führungsschlitten-Rampenabschnitts den Führungsschlitten aus der Fixierstellung in die Ruhestellung.

Vorzugsweise weist die Verriegelungseinrichtung zwei Führungsschlitten-Rampenabschnitte auf, die jeweils wechselseitig an dem Führungsschlitten angeordnet sind, so dass der Führungsschlitten von beiden Seiten angefahren werden kann.

Das Lager weist mehrere Drehgelenke auf und kann eine Kulissenführung aufweisen, die zur Führung des Führungsschlittens aus der Fixierstellung in die Ruhestellung dienen. Erfindungsgemäß vollzieht der Führungsschlitten bei dessen Wechsel aus der Fixierstellung in die Ruhestellung eine Translationsbewegung. Soweit diese Translationsbewegung mittels Drehgelenken umgesetzt wird, kann der Führungsschlitten wie ein Parallelogramm abgeklappt werden. Diese besondere Ausgestaltung des Lagers hat den Vorteil, dass ein Verklemmen des Führungsschlittens beim Wechsel zwischen der Fixierstellung und der Ruhestellung vermieden wird. So kann der Führungsschlitten Riegelnasen oder ähnliche Fixiereinrichtungen aufweisen, die dazu geeignet sind, in die Frachtstücke derart einzugreifen, dass diese auch in horizontale Richtung abgesichert werden. Diese Fixiereinrichtungen können bei Rotationsbewegungen leicht am Frachtstück verklemmen.

Wie bereits erläutert, kann der Führungsschlitten Riegelnasen aufweisen, die in Querrichtung vorstehen, um in die Frachtstücke einzugreifen. Vorzugsweise umfasst der Führungsschlitten einen Querträger und einen Längsträger zur Bildung eines T-Profils. Im Endeffekt kann der Führungsschlitten also relativ flächig ausgebildet werden, so dass eine gute Sicherung der Frachtstücke gewährleistet wird. Des Weiteren stellt die flächige Ausgestaltung des Führungsschlittens sicher, dass Ausfälle aufgrund von Fehlbedienung vermieden werden. Wenn kein Querträger vorgesehen ist, kann die Verriegelungseinrichtung auch als überfahrbare Führung verwendet werden.

Die Auslöseeinrichtung kann Fortsätze umfassen, die die Auslöseeinrichtungs-Rampenabschnitte beherbergen. Die Fortsätze können entlang der Längsrichtung der Verriegelungseinrichtung angeordnet und/oder ausgerichtet sein.

Vorzugsweise haben diese Fortsätze eine geringe Breite, insbesondere kleiner als 3 cm, insbesondere kleiner als 2 cm.

Die geringe Breite des Fortsatzes hat den Vorteil, dass ein versehentliches Entriegeln ausgeschlossen wird. Das heißt, ein in Querrichtung heranfahrendes Frachtstück kann die Auslöseeinrichtung nicht betätigen. Vorzugsweise weist der Fortsatz eine Seitenfläche auf, die sich im Endeffekt parallel zu dem Führungsschlitten erstreckt, so dass in Querrichtung heranfahrende Frachtstücke die Auslöseeinrichtung nicht betätigen können.

Der mindestens eine Fortsatz kann eine Breite aufweisen, die geringer ist als die Breite des Querträgers des Führungsschlittens. Beispielsweise kann die Breite des Fortsatzes geringer sein als die halbe Breite des Querträgers.

Die Verriegelungseinrichtung kann mindestens ein Federelement aufweisen, das den Führungsschlitten in die Fixierposition/Fixierstellung vorspannt. Insofern ist ein mehr oder weniger automatischer Wechsel aus der Ruhestellung in die Fixierstellung denkbar. Des Weiteren kann ein Federelement vorgesehen sein, das die Auslöseeinrichtung in die Blockierstellung vorspannt. Auch hier ist es denkbar, dass die Auslöseeinrichtung automatisch anhand des Federelements aus der Freigabestellung in die Blockierstellung verschwenkt wird.

Ein Blockiermechanismus kann vorgesehen werden, der es ermöglicht, den Fixierschlitten in der Ruhestellung festzustellen. Soweit die oben genannten Federelemente vorhanden sind und sich der Führungsschlitten in der Ruhestellung befindet, kann nach einem Auslösen des Blockiermechanismus der Schlitten automatisch in die Fixierstellung verschwenken und dort mittels der Auslöseeinrichtung festgesetzt werden.

Die Verriegelungseinrichtung kann eine Verriegelungsplatte zur Befestigung der Verriegelungseinrichtung an dem Frachtladedeck und/oder einer Profilschiene umfassen.

Vorzugsweise ist die erfindungsgemäße Verriegelungseinrichtung in einer Profilschiene montiert.

Die eingangs genannte Aufgabe kann des Weiteren durch ein Frachtladedeck, umfassend mindestens eine Verriegelungseinrichtung wie diese vorab beschrieben wurde, gelöst werden.

Die mindestens eine Verriegelungseinrichtung kann mittig auf dem Frachtladedeck zum Bilden mindestens einer ersten Frachtförderbahn und mindestens einer zweiten Frachtförderbahn angeordnet sein. Vorzugsweise ist das Frachtladedeck derart ausgestaltet, dass mehrere sich in ihrer Breite unterscheidende Frachtförderbahnen je nach Konfiguration des Frachtladedecks bereitgestellt werden können. Beispielsweise kann eine ca. 125 Zoll breite Frachtförderbahn mittels der erfindungsgemäßen Verriegelungseinrichtung in zwei ca. 62 Zoll breite Frachtförderbahnen unterteilt werden, so dass je nach Konfiguration Frachtstücke mit einer Breite von 125 Zoll oder von 62 Zoll verladen werden können. Bei einer anderen Anordnung könnte eine breitere Frachtförderbahn in z.B. drei oder vier Spuren unterteilt werden.

Weitere vorteilhafte Ausführungsformen ergeben sich anhand der Unteransprüche.

Nachfolgend wird die Erfindung mittels mehrerer Ausführungsbeispiele beschrieben, die anhand mehrerer Abbildungen näher erläutert werden.

Hierbei zeigen:
- Fig. 1: eine schematische Darstellung eines Flugzeugs mit einem Frachtladedeck;
- Fig. 2: eine schematische Draufsicht auf das Frachtladedeck aus Fig. 1;
- Fig. 3: eine perspektivische Ansicht einer Profilschiene mit mehreren erfindungsgemäßen Verriegelungseinrichtungen;
- Fig. 4: eine perspektivische Detailansicht der erfindungsgemäßen Verriegelungseinrichtung;
- Fig. 5: eine Seitenansicht der Verriegelungseinrichtung aus Fig. 4;
- Fig. 6: eine Draufsicht auf die Verriegelungseinrichtung aus Fig. 4;
- Fig. 7: einen Längsschnitt durch die Verriegelungseinrichtung aus Fig. 4;
- Fig. 8: die Verriegelungseinrichtung aus Fig. 4 in einer Fixierstellung, in der diese seitlich von einem Frachtcontainer angefahren wird; und
- Fig. 9: die Verriegelungseinrichtung aus Fig. 4 in einer Ruhestellung, in der diese von einem Frachtcontainer überfahren wird.

In der nachfolgenden Beschreibung werden für gleiche und gleich wirkende Teile dieselben Bezugsziffern verwendet.

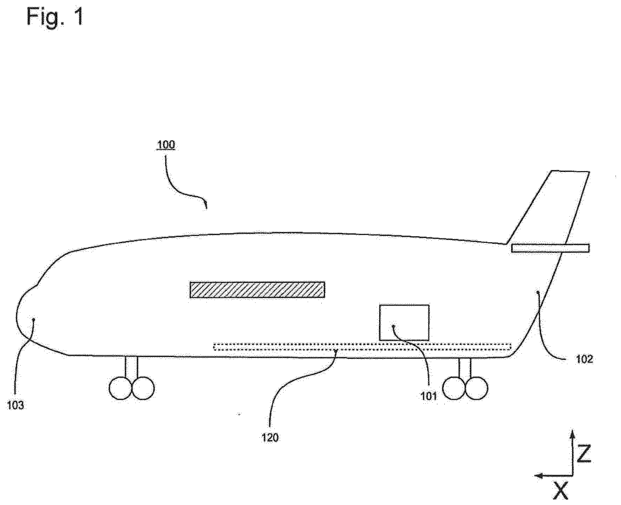

Fig. 1 zeigt eine Seitenansicht eines Flugzeugs 100. Das Flugzeug 100 erstreckt sich im Wesentlichen entlang einer Längsachse des Flugzeugs, nämlich der Flugzeuglängsrichtung X, wobei sich am vorderen Teil ein Bug 103 und am hinteren Teil ein Heck 102 befindet. Quer zur Flugzeuglängsrichtung X nach oben hin erstreckt sich die Z-Achse des Flugzeugs 100. An der Seite des Flugzeugs 100 befindet sich eine Ladeluke 101, über die Frachtstücke in das Flugzeug 100 eingeladen und aus diesem wieder ausgeladen werden können. Entlang der X-Y-Ebene des Flugzeugs 100 erstreckt sich ein Frachtladedeck 120, das über die Ladeluke 101 zugänglich ist.

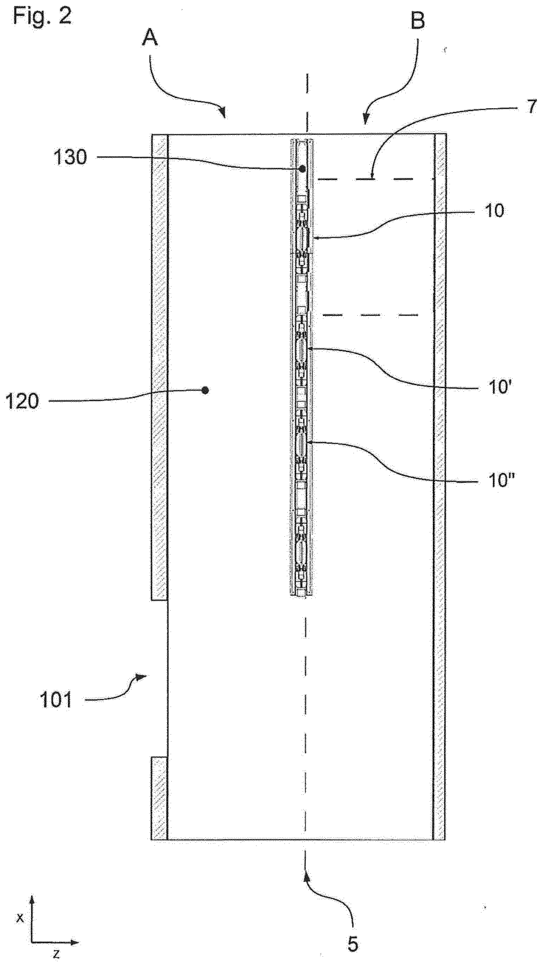

Fig. 2 zeigt eine Draufsicht auf das im Wesentlichen rechteckige Frachtladedeck 120. Das Frachtladedeck 120 kann eine Breite von ca. 125 Zoll aufweisen und ist über eine mittig angeordnete Profilschiene 130, die sich entlang der Flugzeuglängsrichtung X erstreckt in zwei Hälften unterteilt. Die Profilschiene 130 verläuft vorzugsweise entlang einer Mittelebene 5 des Flugzeugs und beherbergt mehrere Verriegelungseinrichtungen 10, 10', 10" (z.B. Riegel). Des Weiteren sind Seitenführungen vorgesehen (in Fig. 2 nicht gezeigt), die in Verbindung mit der Profilschiene 130 eine Frachtladebahn A und eine Frachtladebahn B definieren. Je nach Konfiguration kann das Flugzeug 100 also mit Frachtstücken beladen werden, wobei sich ein Frachtstück über die gesamte Breite des Frachtladedecks 120 (Frachtladebahn A und Frachtladebahn B) erstreckt (Breite = 125 Zoll). In einer anderen Konfiguration teilt die Profilschiene 130 das Frachtladedeck 120 derart auf, dass entlang der Flugzeugquerrichtung Y jeweils zwei Frachtstücke nebeneinander platziert werden können (z. B. Breite = 62 Zoll). Fig. 2 zeigt schematisch einen entsprechenden Frachtcontainer 7 in der Frachtladebahn B.

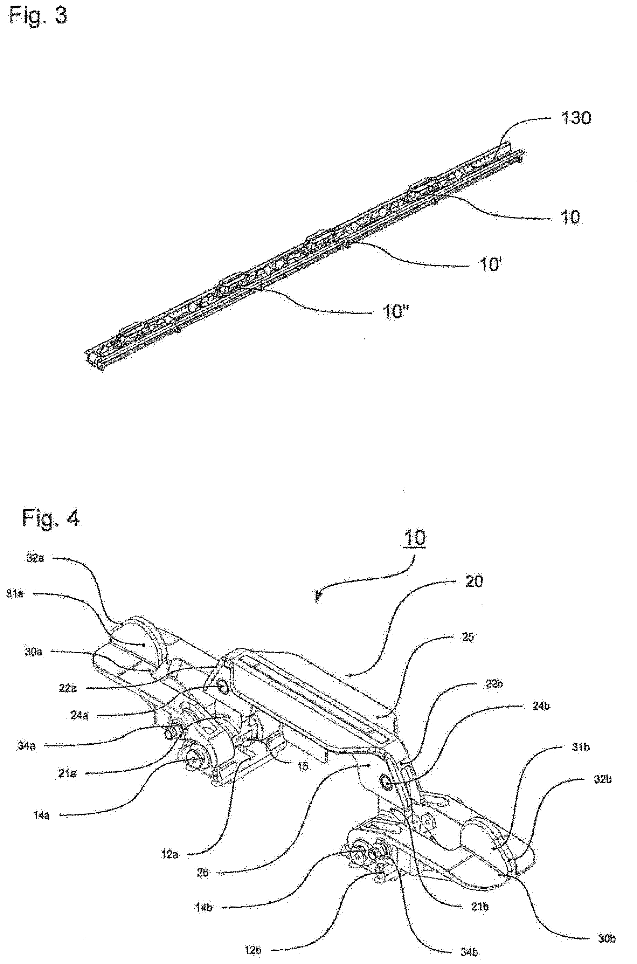

Fig. 3 zeigt eine Detailansicht der Profilschiene 130 mit der Vielzahl von Verriegelungseinrichtungen 10, 10', 10". Innerhalb der Profilschiene 130 sind Rollen vorgesehen, die es ermöglichen, in einer Konfiguration des Frachtladedecks 120 Frachtstücke leicht entlang der Flugzeuglängsrichtung X zu transportieren.

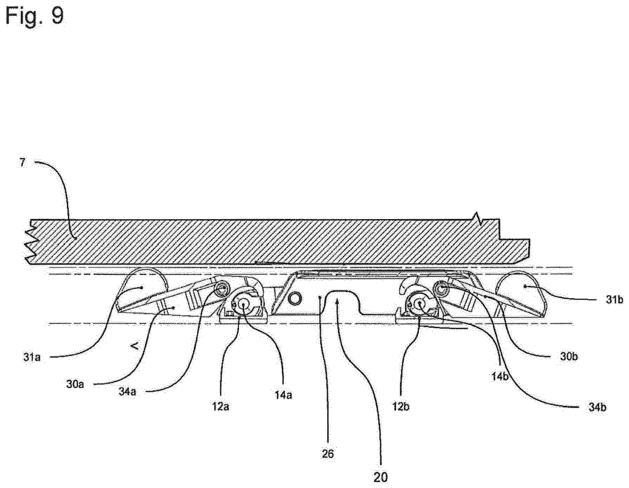

Die perspektivische Detailansicht aus Fig. 4 veranschaulicht einige Elemente der erfindungsgemäßen Verriegelungseinrichtung 10. Ein wesentlicher Aspekt dieser Verriegelungseinrichtung 10 ist es, dass sich ein Führungsschlitten 10 aus einer Fixierstellung (vgl. Fig. 4) in eine Ruhestellung (vgl. Fig. 9) verschwenken lässt. Am Beispiel des in Fig. 2 gezeigten Frachtladedecks 120 lässt sich leicht einsehen, dass die erfindungsgemäße Verriegelungseinrichtung 10 in der Fixierstellung ein separates Beladen der Frachtladebahnen A und B ermöglicht, während in der Ruhestellung die Verriegelungseinrichtung 10 von Frachtstücken überfahren werden kann, so dass ein Frachtstück die gesamte Breite des Frachtladedecks 120 ausnutzen kann. Die beschriebene Verriegelungseinrichtung 10 klappt bei einer Beladung mit breiten Frachtstücken (Frachtladebahn A + B) nach unten weg.

In den Fig. 4-8 ist die Verriegelungseinrichtung 10 zur Verbesserung der Übersichtlichkeit ohne die Profilschiene 130 gezeigt, an welcher sie im Einbauzustand mit Hauptachsen 14a, 14b und Nebenachsen 34a, 34b befestigt ist.

Die in Fig. 4 gezeigte Verriegelungseinrichtung 10 ist im Wesentlichen symmetrisch ausgebildet. Die erste Verankerungsplatte 12a und die zweite Verankerungsplatte 12b stützen Aufstell-Federn 15 ab, von denen nur eine gezeigt ist und sind an der Profilschiene 130 befestigt. Die erste Hauptachse 14a und die zweite Hauptachse 14b stellen jeweils ein Drehgelenk bereit, um einen ersten Schlittenarm 21a und einen zweiten Schlittenarm 21b drehbeweglich an der Profilschiene 130 zu befestigen. In dem gezeigten Ausführungsbeispiel sind der erste Schlittenarm 21a und die erste Hauptachse 14a bzw. der zweite Schlittenarm 21b und die zweite Hauptachse 14b drehfest miteinander verbunden.

An den den Hauptachsen 14a, 14b abgewandten Seiten der Schlittenarme 21a, 21b befinden sich Schlittenachsen 24a, 24b, die jeweils drehbeweglich in einen länglichen Führungsschlitten 20 eingreifen. Die Hauptachsen 14a, 14b und die Schlittenachsen 24a, 24b verlaufen derart parallel zueinander, dass sich der Führungsschlitten 20 in einer Translationsbewegung aus der Fixierstellung in die Ruhestellung verschwenken lässt. Die einzelnen Drehgelenke sind derart ausgebildet, dass sich der Führungsschlitten 20 je nach Anforderung im Uhrzeigersinn oder gegen den Uhrzeigersinn um die Hauptachsen 14a, 14b verschwenken lässt.

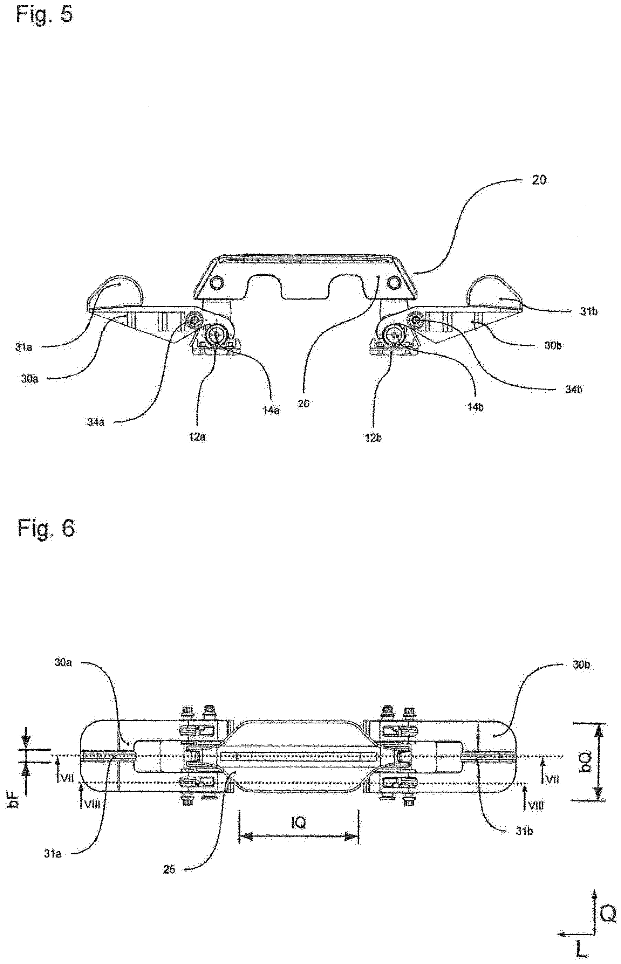

Wie auch in den Fig. 5 und 6 gezeigt, befinden sich wechselseitig des Führungsschlittens 20 Auslöseeinrichtungen 30a, 30b. Die erste Auslöseeinrichtung 30a ist mittels einer ersten Nebenachse 34a drehbeweglich an der Profilschiene 130 befestigt. Dementsprechend ist die zweite Auslöseeinrichtung 30b mittels einer zweiten Nebenachse 34b drehbeweglich an der Profilschiene 130 befestigt. Die Auslöseeinrichtungen 30a, 30b lassen sich nach Art einer Wippe verschwenken, wobei diese aus einer Blockierstellung (vgl. die Fig. 4, 5 und 8) in eine Freigabestellung (vgl. Fig. 9) bringbar sind. Die erste Nebenachse 34a ist in Längsrichtung L gegenüber der ersten Hauptachse 14a versetzt. Dementsprechend ist die zweite Nebenachse 34b in Längsrichtung L gegenüber der zweiten Hauptachse 14b versetzt.

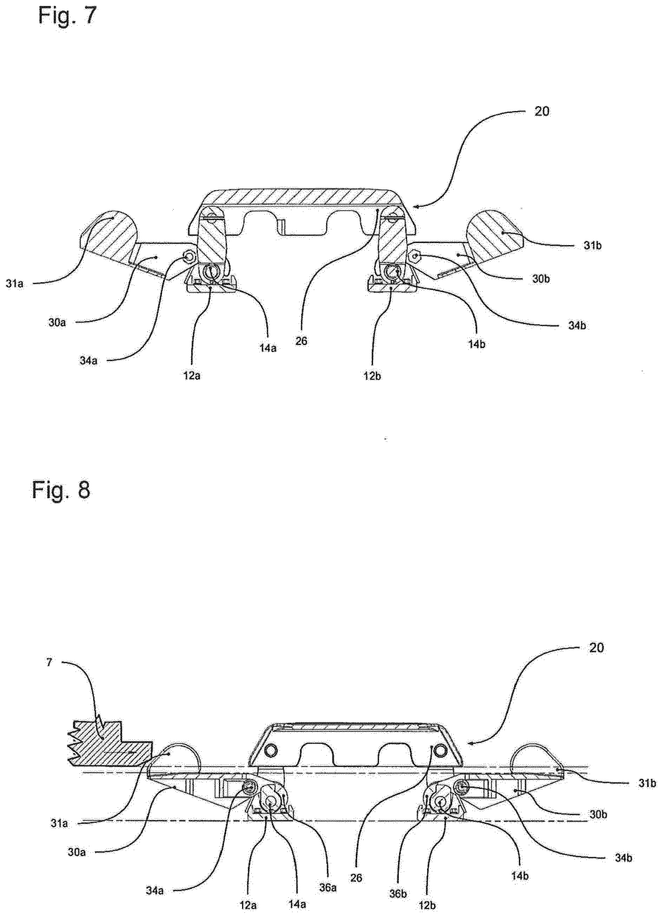

Wie in der Fig. 8 gezeigt, greift in der Blockierstellung der ersten Auslöseeinrichtung 30a ein Blockierelement 36a derart in die erste Hauptachse 14a ein bzw. liegt an dieser an, dass die Hauptachse 14a keine Rotationsbewegung im Uhrzeigersinn (in der Bildebene der Fig. 8) vornehmen kann. In diese Richtung ist die erste Hauptachse 14a gesperrt. Ebenso greift ein zweites Blockierelement 36b in der Blockierstellung der zweiten Auslöseeinrichtung 30b derart in die zweite Hauptachse 14b ein, dass diese keine Rotationsbewegung entgegen dem Uhrzeigersinn vornehmen kann. Soweit sich also die erste und die zweite Auslöseeinrichtung 30a, 30b in der Blockierstellung befinden, lässt sich der Führungsschlitten 20 nicht aus der Fixierstellung in die Ruhestellung verschwenken. Relativ zur Bildebene der Fig. 8 ist weder eine Bewegung nach Links noch nach Rechts möglich.

Es ist denkbar, die Auslöseeinrichtungen 30a, 30b derart auszugestalten, dass bereits eine Auslöseeinrichtung 30a, 30b ausreicht, um die Verschwenkung des Führungsschlittens 20 im oder gegen den Uhrzeigersinn zu verhindern. Auch ist es möglich eine mechanische Verbindung zwischen den Auslöseeinrichtungen herzustellen, so dass die Auslöseeinrichtungen 30a, 30b nur gleichzeitig aus deren Blockierstellung in deren Freigabestellung verschwenkt werden können.

Auf der dem ersten Blockierelement 36a abgewandten Seite der ersten Auslöseeinrichtung 30a (bezüglich der ersten Nebenachse 34a) befindet sich ein erster Fortsatz 31a, der im Wesentlichen vertikal nach oben ragt. Ebenso ist auf der dem zweiten Blockierelement 36b abgewandten Seite der zweiten Auslöseeinrichtung 30b ein zweiter Fortsatz 31b vorgesehen. Auch dieser zweite Fortsatz 31b erstreckt sich in vertikale Richtung. Die Fortsätze 31a, 31b bilden jeweils eine Rampe aus. So gibt es einen ersten Auslöseeinrichtungs-Rampenabschnitt 32a an der dem Führungsschlitten 20 abgewandten Seite der ersten Auslöseeinrichtung 30a und einen zweiten Auslöseeinrichtungs-Rampenabschnitt 32b an der dem Führungsschlitten 20 abgewandten Seite der zweiten Auslöseeinrichtung 30b. Diese Auslöseeinrichtungs-Rampenabschnitte 32a, 32b sind derart ausgebildet, dass ein seitlich an die Verriegelungseinrichtung 10 heranfahrendes Frachtstück (z.B. der Frachtcontainer 7 wie in Fig. 8 gezeigt) die jeweilige Auslöseeinrichtung 30a, 30b aus der Blockierstellung in die Freigabestellung drückt.

Wie in Fig. 4 gezeigt hat auch der Führungsschlitten 20 einen ersten Führungsschlitten-Rampenabschnitt 22a und einen zweiten Führungsschlitten-Rampenabschnitt 22b. Der erste Führungsschlitten-Rampenabschnitt 22a befindet sich an der der ersten Auslöseeinrichtung 30a zugewandten Seite des Führungsschlittens 20 und der zweite Führungsschlitten-Rampenabschnitt 22b an der der zweiten Auslöseeinrichtung zugewandten Seite des Führungsschlittens 20.

Wenn das Frachtstück wie in Fig. 8 gezeigt von einer Seite an die Verriegelungseinrichtung 10 heranfährt, so drückt dieses erst die jeweilige Auslöseeinrichtung 30a, 30b in die Freigabestellung. Danach fährt das Frachtstück an den ersten bzw. zweiten Führungsschlitten-Rampenabschnitt 22a, 22b heran und wirkt so auf diesen ein, so dass der freigegebene Führungsschlitten 20 aus der Fixierstellung in die Ruhestellung verschwenkt wird.

Die Fortsätze 31a, 31b können derart ausgebildet sein, dass diese auch dann in ihre Freigabestellung verschwenkt werden, wenn sie von der der jeweiligen Auslöseeinrichtungs-Rampenabschnitte 32a, 32b abgewandten Seite angefahren werden. Vorzugsweise wirkt der Führungsschlitten 20 bei dessen Verschwenkung aus der Fixierstellung in die Ruhestellung jedoch derart auf die jeweils andere Auslöseeinrichtung 30a, 30b ein, dass diese automatisch in die Freigabestellung geschwenkt wird. Das heißt, wenn der Frachtcontainer 7 wie in Fig. 8 gezeigt von links an die erste Auslöseeinrichtung 30a heranfährt, wird der Führungsschlitten 20 derart entsichert, dass dieser eine Translationsbewegung nach rechts unten vornehmen kann. Diese Translationsbewegung führt dazu, dass der zweite Führungsschlitten-Rampenabschnitt 22b auf die zweite Auslöseeinrichtung 30b derart einwirkt, dass diese aus der Blockierstellung in die Freigabestellung verschwenkt wird.

Vorzugsweise weist die Verriegelungseinrichtung 10 Federelemente auf, die den Führungsschlitten 20 in die Fixierstellung drücken und die Auslöseeinrichtungen 30a, 30b in die Blockierstellung. In dem beschriebenen Ausführungsbeispiel ist die Verriegelungseinrichtung 10 derart ausgebildet, dass trotz der Federn die Auslöseeinrichtungen 30a, 30b erst dann in die jeweilige Freigabestellung zurückkehren können, wenn der Führungsschlitten 20 wieder in die Fixierstellung zurückschwingt. Zusätzlich ist eine Vorrichtung zum bewussten Verriegeln des Führungsschlittens in der Ruhestellung denkbar, um die Verriegelungseinheit bei Bedarf dauerhaft im Frachtboden verstauen zu können.

Wie in den Fig. 5 und 6 gezeigt umfasst der Führungsschlitten 20 einen Querträger 25, der sich im Wesentlichen vertikal erstreckt, und einen Längsträger 26, der sich im Wesentlichen horizontal erstreckt. Der Querträger 25 ragt in Querrichtung also über den Längsträger 26 heraus, so dass sich eine Art T-Profil ergibt. Der Querträger 25 kann eine Rahmenkonstruktion der Frachtstücke derart umgreifen, dass diese entlang der Z-Achse des Flugzeugs abgesichert sind. Im Endeffekt verhindert diese Ausgestaltung des Führungsschlittens 20, dass ein Frachtstück während des Fluges aus einer der Frachtladebahnen A, B herausspringt.

In dem gezeigten Ausführungsbeispiel hat der Querträger 25 eine Querträgerlänge IQ von ca. 15 cm und eine Querträgerbreite bQ von ca. 6 cm. Vorzugsweise ist die Querträgerbreite bQ deutlich größer als eine Fortsatzbreite bF. Im gezeigten Ausführungsbeispiel ist die Fortsatzbreite bF der Fortsätze 31a, 31b ungefähr gleich 1 cm.

Des Weiteren sei darauf hingewiesen, dass im beschriebenen Ausführungsbeispiel die Fortsätze 31a, 31b in Längsrichtung L der Verriegelungseinrichtung 10 deutlich von dem Führungsschlitten 20 in dessen Fixierstellung entfernt sind. Dieser Abstand kann beispielsweise größer als 2 cm, vorzugsweise größer als 4 cm sein.

Auch wenn die vorhergehend beschriebene Verriegelungseinrichtung zwei Auslöseeinrichtungen 30a, 30b aufweist, so ist es durchaus denkbar, lediglich eine Auslöseeinrichtung 30a an einer Seite des Führungsschlittens vorzusehen. Insofern wäre es denkbar, dass sich der Führungsschlitten 20 nur dann absenkt, wenn dieser von der Seite angefahren wird, auf der sich die entsprechende Auslöseeinrichtung 30a, 30b befindet.

Des Weiteren bilden die Drehgelenke der Hauptachsen 14a, 14b und der Nebenachsen 34a, 34b ein Lager aus, das es ermöglicht, den Führungsschlitten 20 in geeigneter Weise zu verschwenken. Es ist möglich, die Drehgelenke durch eine Kulissenführung zu ersetzen.

Die beschriebene Verriegelungseinrichtung 10 ist in der Profilschiene 130 verankert. Jedoch kann die Verriegelungseinrichtung 10 auch mit einem Rahmen versehen direkt am oder im Frachtladedeck 120 angeordnet sein.

In dem erläuterten Ausführungsbeispiel ragt der Querträger 25 wechselseitig über den Längsträger 26 hinaus. Es wäre möglich, auf den Querträger 25 gänzlich zu verzichten oder diesen derart auszubilden, dass er lediglich auf einer Seite über den Längsträger 26 herausragt.

### Bezugszeichenliste

- 5: Mittelebene
- 7: Frachtcontainer
- 10, 10', 10": Verriegelungseinrichtung
- 12a, 12b: Verankerungsplatte
- 14a, 14b: Hauptachse
- 15: Aufstell-Feder
- 20: Führungsschlitten
- 21a, 21b: Schlittenarm
- 22a, 22b: Führungsschlitten-Rampenabschnitt
- 24a, 24b: Schlittenachse
- 25: Querträger
- 26: Längsträger
- 30a, 30b: Auslöseeinrichtung
- 31a, 31b: Fortsatz
- 32a, 32b: Auslöseeinrichtungs-Rampenabschnitt
- 34a, 34b: Nebenachse
- 36a, 36b: Blockierelement
- 100: Flugzeug
- 101: Ladeluke
- 102: Heck
- 103: Bug
- 120: Frachtladedeck
- 130: Profilschiene
- A: Frachtladebahn A
- B: Frachtladebahn B
- X: Flugzeuglängsrichtung
- Y: Flugzeugquerrichtung
- Z: Z-Achse des Flugzeugs
- L: Längsrichtung der Verriegelungseinrichtung
- Q: Querrichtung der Verriegelungseinrichtung
- bF: Fortsatzbreite
- bQ: Querträgerbreite
- lQ: Querträgerlänge

## Patentansprüche

1. Profilschiene mit einer Verriegelungseinrichtung (10) zum Sichern und Führen mindestens eines Frachtstücks (7) auf einem Frachtladedeck (101), umfassend:
- einen sich in Längsrichtung (L) erstreckenden Führungsschlitten (20);
- ein Lager in dem der Führungsschlitten (20) derart beweglich gelagert ist, dass der Führungsschlitten (20) aus einer Fixierstellung in eine Ruhestellung verschwenkbar ist;
- mindestens eine Auslöseeinrichtung (30a, 30b), die über mindestens ein Gelenk so an der Profilschiene befestigt ist, dass die Auslöseeinrichtung (30a, 30b) aus einer Blockierstellung in eine Freigabestellung bringbar ist, wobei die Auslöseeinrichtung (30a, 30b) in der Blockierstellung derart auf den Führungsschlitten (20) einwirkt, dass dieser in der Fixierstellung blockiert ist,
wobei die Auslöseeinrichtung (30a, 30b) mindestens einen Auslöseeinrichtungs-Rampenabschnitt (32a, 32b) aufweist, der derart ausgebildet und angeordnet ist, dass ein in Längsrichtung (L) heranfahrendes Frachtstück (7) die Auslöseeinrichtung (30a, 30b) aus der Blockierstellung in die Freigabestellung verschwenkt, **dadurch gekennzeichnet, dass** das Lager zur Führung des Führungsschlittens (20) aus der Fixierstellung in die Ruhestellung in einer Translationsbewegung mehrere Drehgelenke aufweist.

2. Profilschiene nach Anspruch 1,
**gekennzeichnet durch**
mindestens zwei Auslöseeinrichtungen (30a, 30b), die wechselseitig des Führungsschlittens (20), insbesondere entlang der Längsrichtung (L), angeordnet sind.

3. Profilschiene nach einem der vorhergehenden Ansprüche,
**dadurch gekennzeichnet, dass**
der Führungsschlitten (20) mindestens einen Führungsschlitten-Rampenabschnitt (22a, 22b), vorzugsweise zwei Führungsschlitten-Rampenabschnitte (22a, 22b), aufweist, der/die derart angeordnet und ausgebildet ist bzw. sind, dass ein in Längsrichtung (L) heranfahrendes Frachtstück (7) den Führungsschlitten (20) aus der Fixierstellung in die Ruhestellung verschwenkt, wobei die Führungsschlitten-Rampenabschnitte (22a, 22b) vorzugsweise wechselseitig am Führungsschlitten (20) angeordnet sind.

4. Profilschiene nach einem der vorhergehenden Ansprüche,
**dadurch gekennzeichnet, dass**
der Führungsschlitten (20) einen Längsträger (26) ohne Querträger (25) zur Bildung einer überfahrbaren Führung umfasst.

5. Profilschiene nach Anspruch 1,
**dadurch gekennzeichnet, dass**
der Führungsschlitten (20) einen Querträger (25) und einen Längsträger (26) zur Bildung eines T-Profils umfasst.

6. Profilschiene nach einem der vorhergehenden Ansprüche,
**gekennzeichnet durch**
mindestens einen Fortsatz (31a, 31b) an der mindestens einen Auslöseeinrichtung (30a, 30b) zur Beherbergung des mindestens einen Auslöseeinrichtungs-Rampenabschnitts (32a, 32b).

7. Profilschiene nach Anspruch 6,
**dadurch gekennzeichnet, dass**
der mindestens eine Fortsatz (31a, 31b) eine geringe Breite (bF), insbesondere kleiner als 3 cm, insbesondere kleiner als 2 cm aufweist.

8. Profilschiene nach Anspruch 6 oder 7,
**dadurch gekennzeichnet, dass**
der mindestens eine Fortsatz eine Breite (bF) aufweist, die geringer ist als die Breite (bQ) des/eines Querträgers (25) des Führungsschlittens (20).

9. Profilschiene nach einem der vorhergehenden Ansprüche,
**gekennzeichnet durch**
mindestens ein Federelement, das den Führungsschlitten (20) in die Fixierstellung vorspannt, und/oder mindestens ein Federelement, das die Auslöseeinrichtung (30a, 30b) in die Blockierstellung vorspannt.

10. Frachtladedeck (120), umfassend mindestens eine Profilschiene nach einem der vorhergehenden Ansprüche.

11. Frachtladedeck (120) nach Anspruch 10,
**dadurch gekennzeichnet, dass**
die mindestens eine Verriegelungseinrichtung (10) auf dem Frachtladedeck (120) zum Bilden mindestens einer ersten Frachtförderbahn (A) und mindestens einer zweiten Frachtförderbahn (B) angeordnet ist.

## Claims

1. Profile rail with an interlocking device (10) for securing and guiding at least one item of freight (7) on a freight loading deck (101), comprising:
- a guide carriage (20) extending in the longitudinal direction (L);
- a bearing in which the guide carriage (20) is supported to be movable in such a manner that the guide carriage (20) is pivotable from a fixing position to a rest position;
- at least one trigger device (30a, 30b) which is attached to the profile rail via at least one joint so that the trigger device (30a, 30b) may be brought from a blocking position to a releasing position, wherein the trigger device (30a, 30b) acts upon the guide carriage (20) in the blocking position in such a manner that the same is blocked in the fixing position,
wherein the trigger device (30a, 30b) exhibits at least one trigger device ramp section (32a, 32b) which is configured and arranged such that an item of freight (7) approaching in the longitudinal direction (L) pivots the trigger device (30a, 30b) from the blocking position to the releasing position, **characterised in that**
the bearing for guiding the guide carriage (20) from the fixing position to the rest position in a translational movement exhibits a plurality of swivel joints.

2. Profile rail according to claim 1,
**characterised by**
at least two trigger devices (30a, 30b) arranged on both sides of the guide carriage (20), in particular along the longitudinal direction (L).

3. Profile rail according to any one of the preceding claims,
**characterised in that**
the guide carriage (20) has at least one guide carriage ramp section (22a, 22b) preferably two guide carriage ramp sections (22a, 22b) which is/are arranged and configured in such a manner that an item of freight (7) approaching in the longitudinal direction (L) pivots the guide carriage (20) from the fixing position to the rest position, wherein the guide carriage ramp sections (22a, 22b) preferably are arranged on both sides the guide carriage (20).

4. Profile rail according to any one of the preceding claims,
**characterised in that**
the guide carriage (20) comprises a longitudinal beam (26) without crossbeam (25) for forming a traversable guide.

5. Profile rail according to claim 1,
**characterised in that**
the guide carriage (20) comprises a crossbeam (25) and a longitudinal beam (26) for forming a T-profile.

6. Profile rail according to any one of the preceding claims,
**characterised by**
at least one protrusion (31a, 31b) on the at least one trigger device (30a, 30b) for accommodating the at least one trigger device ramp section (32a, 32b).

7. Profile rail according to claim 6,
**characterised in that**
the at least one protrusion (31a, 31b) has a small width (bF), in particular of less than 3 cm, in particular of less than 2 cm.

8. Profile rail according to claim 6 or 7,
**characterised in that**
the at least one protrusion has a width (bF) that is smaller than the width (bQ) of the/of a crossbeam (25) of the guide carriage (20).

9. Profile rail according to any one of the preceding claims,
**characterised by**
at least one spring element biasing the guide carriage (20) into the fixing position, and/or at least one spring element biasing the trigger device (30a, 30b) into the blocking position.

10. Freight loading deck (120) comprising at least one profile rail according to any one of the preceding claims.

11. Freight loading deck (120) according to claim 10,
**characterised in that**
the at least one interlocking device (10) is arranged on the freight loading deck (120) for forming at least a first freight conveying track (A) and at least a second freight conveying track (B).

## Revendications

1. Rail profilé comportant un dispositif de verrouillage (10) pour sécuriser et guider au moins un colis (7) sur un pont de chargement de cargaison (101), comportant :
- un chariot de guidage (20) qui s'étend en direction longitudinale (L) ;
- un palier dans lequel le chariot de guidage (20) est monté mobile de telle sorte que le chariot de guidage (20) est susceptible de pivoter d'une position de fixation jusque dans une position de repos ;
- au moins un dispositif de déblocage (30a, 30b) qui est fixé sur le rail profilé par au moins une articulation de telle sorte que le dispositif de déblocage (30a, 30b) est susceptible d'être amené depuis une position de blocage jusque dans une position de libération, le dispositif de déblocage (30a, 30b) agissant sur le chariot de guidage (20) dans la position de blocage de telle sorte que celui-ci est bloqué dans la position de fixation,
le dispositif de déblocage (30a, 30b) comprenant au moins une portion de rampe (32a, 32b) qui est réalisée et agencée de telle sorte qu'un colis (7) s'approchant en direction longitudinale (L) fait pivoter le dispositif de déblocage (30a, 30b) depuis la position de blocage jusque dans la position de libération,
**caractérisé en ce que**
le palier destiné à guider le chariot de guidage (20) depuis la position de fixation jusque dans la position de repos selon un mouvement de translation comprend plusieurs articulations rotatives.

2. Rail profilé selon la revendication 1,
**caractérisé par**
au moins deux dispositifs de déblocage (30a, 30b) qui sont agencés de part et d'autre du chariot de guidage (20), en particulier le long de la direction longitudinale (L).

3. Rail profilé selon l'une des revendications précédentes,
**caractérisé en ce que**
le chariot de guidage (20) comprend au moins une portion de rampe (22a, 22b), de préférence deux portions de rampe (22a, 22b) qui est/sont agencée(s) et réalisée(s) de telle sorte qu'un colis (7) s'approchant en direction longitudinale (L) fait pivoter le chariot de guidage (20) depuis la position de fixation jusque dans la position de repos, les portions de rampe (22a, 22b) étant agencées de préférence de part et d'autre sur le chariot de guidage (20).

4. Rail profilé selon l'une des revendications précédentes,
**caractérisé en ce que**
le chariot de guidage (20) comprend un support longitudinal (26) sans support transversal (25) pour former un guidage accessible par le dessus.

5. Rail profilé selon la revendication 1,
**caractérisé en ce que**
le chariot de guidage (20) comprend un support transversal (25) et un support longitudinal (26) pour former un profilé en T.

6. Rail profilé selon l'une des revendications précédentes,
**caractérisé par**
au moins un prolongement (31a, 31b) sur ledit au moins un dispositif de déblocage (30a, 30b) pour loger ladite au moins une portion de rampe (32a, 32b) du dispositif de déblocage.

7. Rail profilé selon la revendication 6,
**caractérisé en ce que**
ledit au moins un prolongement (31a, 31b) présente une faible largeur (bF) en particulier inférieure à 3 cm, plus particulièrement inférieure à 2 cm.

8. Rail profilé selon la revendication 6 ou 7,
**caractérisé en ce que**
ledit au moins un prolongement présente une largeur (bF) qui est inférieure à la largeur (bQ) du/d'un support transversal (25) du chariot de guidage (20).

9. Rail profilé selon l'une des revendications précédentes,
**caractérisé par**
au moins un élément élastique qui met sous précontrainte le chariot de guidage (20) dans la position de fixation, et/ou au moins un élément élastique qui met sous précontrainte le dispositif de déblocage (30a, 30b) dans la position de blocage.

10. Pont de chargement de cargaison (120), comprenant au moins un rail profilé selon l'une des revendications précédentes.

11. Pont de chargement de cargaison (120) selon la revendication 10,
**caractérisé en ce que**
ledit au moins un dispositif de verrouillage (10) est agencé sur le pont de chargement de cargaison (120) pour former au moins une première voie de transport de cargaison (A) et au moins une seconde voie de transport de cargaison (B).
